# FASCICULE DE BREVET EUROPEEN

(11) **EP 4 279 308 B1**
(45) Date de publication et mention de la délivrance du brevet: **26.11.2025**
(21) Numéro de dépôt: 23173760.2
(22) Date de dépôt: 16.05.2023
(51) Int. Cl.: B60K 6/387, B60K 6/40, B60K 6/547, B60W 10/08, B60W 10/196, B60W 20/14, B60W 30/18, B60K 6/48, B60K 6/38, F16H 1/00, B60K 6/36, B60K 6/405, F16H 3/00

(54) **SOUS-ENSEMBLE HYBRIDE D'ENTRAÎNEMENT D'UN VÉHICULE**
HYBRIDANTRIEBSBAUGRUPPE FÜR EIN FAHRZEUG
HYBRID DRIVE ASSEMBLY FOR A VEHICLE

(30) Priorité: 19.05.2022 FR 2204766
(43) Date de publication de la demande: 22.11.2023
(73) Titulaire: VALEO EMBRAYAGES, 80009 Amiens (FR)
(72) Inventeur: VASSIEUX, Loic, 80000 Amiens (FR); LHEUREUX, Dominique, 80000 Amiens (FR)
(74) Mandataire: Valeo Powertrain Systems

(56) Documents cités:
- EP-A1- 3 100 891
- WO-A1-2011/154823
- US-A- 5 643 119
- US-A1- 2014 171 259
- US-A1- 2021 070 280

## Description

### DOMAINE TECHNIQUE DE L'INVENTION

L'invention se rapporte à un sous-ensemble hybride d'entraînement d'un véhicule destiné à être positionné entre un moteur, par exemple un moteur thermique, et un ensemble d'une ou plusieurs roues motrices d'un véhicule. Elle se rapporte en particulier, bien que de façon non exclusive, à un tel sous-ensemble destiné à équiper un poids lourd, c'est-à-dire un véhicule routier de plus de 3,5 tonnes, notamment un tracteur routier. Le véhicule peut également être un autocar. L'invention se rapporte également à un procédé de freinage de ce véhicule comprenant un tel sous-ensemble hybride.

### ETAT DE LA TECHNIQUE ANTERIEURE

Dans le document WO2011/072986A1 est décrit un sous-ensemble hybride d'entraînement d'un véhicule, comportant un arbre primaire destiné à être entraîné par un moteur thermique du véhicule, un arbre secondaire destiné à entraîner un ensemble d'une ou plusieurs roues motrices du véhicule, et une boîte de transmission comportant une ou plusieurs roues dentées primaires solidaires en rotation de l'arbre primaire ou aptes à être accouplées à l'arbre primaire, une pluralité de roues dentées secondaires solidaires en rotation de l'arbre secondaire ou aptes être accouplées à l'arbre secondaire, et deux arbres intermédiaires auxquels sont solidarisées en rotation des roues dentées intermédiaires, la ou les roues dentées primaires et les roues dentées secondaires engrenant chacune avec une roue dentée correspondante parmi les roues dentées intermédiaires. Le sous-ensemble hybride d'entraînement comporte en outre une machine électrique réversible liée cinématiquement aux arbres intermédiaires via un étage amont de démultiplication et un mécanisme d'accouplement à crabot, ladite machine électrique étant apte à fonctionner en générateur de courant pour freiner les arbres intermédiaires ou en moteur d'entraînement des arbres intermédiaires. Une telle machine électrique permet d'envisager différents modes de fonctionnement, et notamment un fonctionnement transitoire de la machine électrique pour freiner ou accélérer les arbres intermédiaires et favoriser la synchronisation de la boîte de transmission dans les phases de changement de rapport de transmission, un fonctionnement moteur pour assister l'entraînement du moteur principal du véhicule hors des phases de changement de rapport et un fonctionnement de générateur électrique, pour l'alimentation électrique d'accessoires du véhicule ou d'une batterie, notamment dans des phases de freinage du véhicule. Dans ce sous-ensemble hybride, la machine électrique réversible est disposée en ligne par rapport au moteur thermique, c'est-à-dire que le rotor de la machine électrique est concentrique à la sortie du moteur thermique.

Dans le document WO2011/072986A1, la machine électrique réversible est forcément liée cinématiquement à l'arbre secondaire via l'arbre intermédiaire. Cette liaison avec l'arbre secondaire ne peut pas être directe de sorte que certains modes de fonctionnement ne sont pas optimisés en terme de rendement mécanique, notamment la phase de régénération de la batterie. Dans ce mode de fonctionnement, le couple provenant des roues du véhicule doit traverser l'ensemble de la boite de transmission pour entrer dans la machine électrique réversible et permettre son fonctionnement en mode générateur électrique.

Il est donc nécessaire d'envisager une configuration mécanique permettant de lier cinématiquement directement la machine électrique réversible à l'arbre secondaire avec un rapport de démultiplication adapté pour envisager de nouvelles fonctionnalités telle que le mode d'assistance de freinage du véhicule sans intervention de l'arbre intermédiaire. [Le document EP3100891 décrit également un sous-ensemble hybride d'entraînement d'un véhicule.]

### EXPOSE DE L'INVENTION

L'invention vise à remédier aux inconvénients de l'état de la technique et à proposer une meilleure intégration d'une machine électrique aux arbres intermédiaire et secondaire d'une boîte de transmission, permettant d'envisager des modes de fonctionnement précédemment inaccessibles.

Pour ce faire est proposé, selon un premier aspect de l'invention, un sous-ensemble hybride d'entraînement d'un véhicule, du type comportant : au moins un arbre primaire, au moins un arbre secondaire et une boîte de transmission comportant au moins un arbre intermédiaire distinct de l'arbre primaire et de l'arbre secondaire et des trains de roues dentées pour réaliser plusieurs rapports de transmission entre l'arbre primaire et l'arbre secondaire en passant par l'arbre intermédiaire. Le sous-ensemble hybride comporte également un groupe électromoteur comportant au moins une machine électrique réversible, et un dispositif d'accouplement qui, dans au moins une position d'accouplement secondaire, lie cinématiquement l'arbre de sortie de la machine électrique réversible à l'arbre secondaire sans passer par l'arbre intermédiaire. De façon remarquable, le sous-ensemble hybride comprend un dispositif de freinage d'arbre de type multidisque en prise avec l'arbre de sortie pour freiner l'arbre secondaire lorsque le dispositif d'accouplement est dans la position d'accouplement secondaire.

Il est ainsi avantageux de freiner l'arbre secondaire par rapport à une partie fixe de la boite de transmission lorsque le dispositif d'accouplement est dans la position d'accouplement secondaire. On apporte de manière simple une capacité de freinage supplémentaire au véhicule.

Dans la position d'accouplement secondaire, le dispositif d'accouplement permet une transmission directe de puissance entre la machine électrique réversible et l'arbre secondaire sans entraînement de l'arbre intermédiaire. Ceci permet d'envisager notamment un mode d'assistance de freinage du véhicule dans lequel le dispositif de freinage d'arbre est agencé pour ralentir l'arbre secondaire. Le dispositif de freinage d'arbre du sous-ensemble hybride permet d'assurer la fonction de ralentissement du véhicule lorsque celui-ci se trouve sur une pente à faible pourcentage et pour lequel le conducteur ne veut pas utiliser son système de freinage principal. Dans ce mode d'assistance de freinage, la capacité de freinage du dispositif de freinage d'arbre de type multidisque peut être comprise entre 20 % et 60 % de la capacité de freinage de la machine électrique réversible. La fonction de ralentissement du véhicule sans dispositif de freinage d'arbre réclamerait une machine électrique réversible de forte puissance. Il est nécessaire de dissiper de l'énergie en grande quantité sur un temps court. La machine électrique réversible utilisée seule pour cette fonction de ralentissement devrait alors avoir des caractéristiques de puissance maximale spécifique pour cette application. Le dispositif de freinage d'arbre apporte le complément de freinage de l'arbre secondaire nécessaire et permet de réduire le dimensionnement de la machine électrique réversible tout en assurant les autres modes de fonctionnement. Le cout de la machine électrique réversible est ainsi réduit.

De préférence, le dispositif de freinage d'arbre peut être en prise directement ou indirectement avec l'arbre de sortie. Au sens de l'invention, lorsque le dispositif de freinage d'arbre est en prise directe avec l'arbre de sortie, un des constituants du dispositif de freinage d'arbre engrène directement ou est entrainé en rotation directement par l'arbre de sortie. Lorsque le dispositif de freinage d'arbre est en prise indirecte avec l'arbre de sortie, un des constituants du dispositif de freinage d'arbre engrène avec un arbre de transmission lié cinématiquement aux arbres de sortie. La liaison cinématique peut se faire à l'aide d'un engrenage, d'une courroie ou d'une chaine de transmission. Dans ce deuxième cas, un des constituants du dispositif de freinage d'arbre engrène directement l'arbre de transmission associé. Ainsi, le dispositif de freinage d'arbre est en prise indirectement avec l'arbre de sortie par freinage de l'arbre de transmission associé.

La transmission directe de puissance entre la machine électrique réversible et l'arbre secondaire sans entraînement de l'arbre intermédiaire permet d'envisager également d'autres modes de fonctionnement qui seront décrit plus loin, parmi lesquels : un mode d'entraînement électrique permanent de l'arbre secondaire par la machine électrique réversible fonctionnant en moteur, un mode transitoire de maintien de la traction lors des changements de rapport, un mode de freinage régénératif pur minimisant le couple mécanique résistant.

De préférence, le dispositif de freinage d'arbre comprend un ensemble multidisques.

Avantageusement, le dispositif de freinage d'arbre de type multidisque peut être interposé dans le sens d'acheminement du couple entre le rotor de la machine électrique réversible et le dispositif d'accouplement.

De préférence, le dispositif de freinage d'arbre de type multidisque peut être interposé axialement entre le rotor de la machine électrique réversible et le dispositif d'accouplement.

Avantageusement, le dispositif de freinage d'arbre de type multidisque peut comprendre un porte-disques tournant agencé pour être lié en rotation avec l'arbre de sortie, un porte-disques statique agencé pour être lié en rotation avec une partie fixe de la boite de transmission et un ensemble multidisques constitué par un premier jeu de disques en prise avec des cannelures du porte-disques tournant, et un deuxième jeu de disques en prise avec des cannelures du porte-disques statique.

Le porte-disques tournant du dispositif de freinage d'arbre peut être lié en rotation par cannelure avec l'arbre de sortie ou fixé rigidement sur l'arbre de sortie par l'intermédiaire de vis de fixation, de rivets ou par soudure.

Selon une variante de l'invention, le dispositif de freinage d'arbre peut être en prise indirecte avec l'arbre de sortie de la machine électrique réversible par utilisation d'un réducteur de vitesse, le porte-disques tournant étant solidaire en rotation du pignon de sortie du réducteur de vitesse.

Selon une variante de l'invention, l'ensemble multidisques du dispositif de freinage d'arbre peut être pressé axialement par un piston d'actionnement de forme annulaire, coaxial à l'arbre de sortie de la machine électrique réversible, le piston d'actionnement étant guidé axialement au sein d'une chambre de pression formée directement ou indirectement dans un stator de la machine électrique réversible. Cette structure de dispositif de freinage d'arbre présente l'avantage d'être compacte radialement et de pouvoir s'intégrer facilement au sein d'une boite de transmission.

Selon une autre variante de l'invention, l'ensemble multidisques du dispositif de freinage d'arbre peut être pressé axialement par un piston d'actionnement de forme annulaire, coaxial à l'arbre de sortie de la machine électrique réversible, le piston d'actionnement étant guidé axialement au sein d'une chambre de pression formée directement ou indirectement dans le carter de la boite de transmission.

Selon une autre variante de l'invention, le dispositif d'accouplement peut être interposé axialement entre le rotor de la machine électrique réversible et le dispositif de freinage d'arbre de type multidisque.

Avantageusement, l'ensemble multidisques du dispositif de freinage d'arbre peut être pressé axialement par un piston d'actionnement de forme annulaire, coaxial à l'arbre de sortie de la machine électrique réversible, le piston d'actionnement étant guidé axialement au sein d'une chambre de pression formée directement ou indirectement dans un carter de la boite de transmission.

De préférence, le dispositif d'accouplement peut comprendre plusieurs positions d'accouplement, notamment une première position d'accouplement intermédiaire, distincte de la position d'accouplement secondaire, qui lie cinématiquement l'arbre de sortie de la machine électrique réversible à l'arbre intermédiaire, et le dispositif de freinage d'arbre de type multidisque en prise avec l'arbre de sortie du sous-ensemble hybride est agencé pour freiner l'arbre intermédiaire lorsque le dispositif d'accouplement est dans la première position d'accouplement intermédiaire.

Le dispositif d'accouplement peut comprendre une pluralité de positions d'accouplement et/ou de désaccouplement, par exemple trois positions d'accouplement distinctes, permettant une transmission de puissance en provenance de la machine électrique réversible vers l'arbre intermédiaire ou l'arbre secondaire selon des rapports de transmission différents.

La machine électrique réversible pourra notamment être une machine synchrone à aimants permanents, une machine asynchrone, une machine électrique à réluctance variable ou une machine électrique synchrone à réluctance variable, dite synchro-réluctante.

Suivant un mode de réalisation, le dispositif d'accouplement, dans au moins une position de désaccouplement, désaccouple cinématiquement de manière simultanée l'arbre de sortie de la machine électrique réversible à l'arbre intermédiaire et à l'arbre secondaire. Cette position du dispositif d'accouplement permet de mettre en œuvre des modes de fonctionnement supplémentaires dans lesquels la machine électrique est désaccouplée, soit parce qu'elle n'est pas nécessaire au fonctionnement de la boîte de transmission, soit parce qu'elle est utilisée à d'autres fins, par exemple pour l'entraînement d'un autre organe tournant. Le découplage de la machine électrique permet de limiter l'inertie et le couple résistant au niveau de l'arbre intermédiaire, et de soulager les paliers de guidage de son rotor, ce qui augmente leur durée de vie.

Suivant un mode de réalisation, le dispositif d'accouplement comprend au moins un mécanisme d'accouplement lié cinématiquement de façon permanente à l'arbre de sortie de la machine électrique réversible, un réducteur de vitesse intermédiaire lié cinématiquement de façon permanente à l'arbre intermédiaire et un réducteur de vitesse secondaire liée cinématiquement de façon permanente à l'arbre secondaire. Le réducteur de vitesse secondaire peut avantageusement comprendre une roue dentée d'inversion guidée en rotation par un palier de guidage coaxial avec l'arbre intermédiaire.

La machine électrique réversible peut être de préférence dimensionnée de manière à être pleinement opérationnelle pour de larges plages de fonctionnement dans les divers modes de fonctionnement envisagée. Ainsi, on prévoit de façon préférentielle que la machine électrique réversible réponde à un ou plusieurs des critères suivants :
- la machine électrique réversible est apte à développer de façon continue un couple moteur supérieur à 300 Nm, et de préférence supérieure à 350Nm, dans une plage de vitesse de plus de 1000 tr/min, et de préférence de plus de 2000 tr/min comprise ayant une borne inférieure qui est inférieure à 6000 tr/min, et de préférence inférieure à 5000 tr/min, et une borne supérieure qui est supérieure à 6000 tr/min, de préférence supérieure à 7000 tr/min, et de préférence supérieure à 9000 tr/min ;
- la machine électrique réversible est apte à développer un couple résistant supérieur à 400 Nm et de préférence supérieur à 450Nm dans une plage de vitesse de plus de 3000 tr/min, et de préférence de plus de 4000 tr/min ayant une borne inférieure qui est inférieure à 6500 tr/min, et de préférence inférieure à 6000 tr/min et une borne supérieure qui est supérieure à 9000 tr/min, et de préférence supérieure à 10000 tr/min, pendant 30 secondes ;
- la machine électrique réversible est apte à développer un couple moteur supérieur à 50 Nm et de préférence supérieur à 60Nm dans une plage de vitesse de plus de 5500 tr/min, et de préférence de plus de 7000 tr/min ayant une borne inférieure qui est inférieure à 5000 tr/min, et de préférence inférieure à 4500 tr/min et une borne supérieure qui est supérieure à 10000 tr/min, et de préférence supérieure à 11000 tr/min, pendant 5 secondes en régime de transitoire de changement de rapport.

En pratique, le dispositif d'accouplement dans la première position d'accouplement intermédiaire lie cinématiquement l'arbre de sortie de la machine électrique réversible à l'arbre intermédiaire avec un rapport de transmission dit intermédiaire alors que le dispositif d'accouplement dans la position d'accouplement secondaire lie cinématiquement la machine électrique réversible à l'arbre secondaire avec un rapport de transmission dit secondaire. Suivant un exemple de réalisation, le dispositif d'accouplement répond à un ou plusieurs des critères suivants :
- le rapport de transmission secondaire est supérieur à 6, et de préférence supérieur ou égal à 8 ;
- le rapport de transmission intermédiaire supérieur 4, et de préférence supérieur ou égal à 6 entre l'arbre intermédiaire et l'arbre de sortie de de la machine électrique réversible ;
- le rapport de transmission secondaire est strictement supérieur au rapport de transmission intermédiaire, de préférence avec un facteur supérieur ou égal à 1,5 entre rapport de transmission secondaire et rapport de transmission intermédiaire.

Il peut être avantageux de disposer de plusieurs rapports de transmission entre la machine électrique réversible et l'arbre intermédiaire et/ou entre la machine électrique réversible et l'arbre secondaire. A cette fin, le dispositif d'accouplement, dans une position d'accouplement intermédiaire supplémentaire, lie cinématiquement la machine électrique réversible à l'arbre intermédiaire avec un rapport de transmission intermédiaire supplémentaire distinct du rapport de transmission intermédiaire.

Suivant un mode de réalisation particulièrement avantageux, le sous-ensemble hybride comporte en outre un organe de prise de force, apte à être entraîné au moins par la machine électrique réversible, de préférence de l'une des manières suivantes :
- l'organe de prise de force est lié cinématiquement de façon permanente à l'arbre intermédiaire ;
- l'organe de prise de force est lié cinématiquement à l'arbre intermédiaire par l'intermédiaire du dispositif d'accouplement en position d'accouplement intermédiaire ;
- l'organe de prise de force est lié cinématiquement à l'arbre de sortie de la machine électrique réversible par l'intermédiaire du dispositif d'accouplement en position d'accouplement intermédiaire.

Suivant ce mode de réalisation, l'organe de prise de force peut être coaxial à l'arbre intermédiaire.

Suivant un autre mode de réalisation particulièrement avantageux, le sous-ensemble hybride comporte un organe de prise de force, apte à être entraîné au moins par la machine électrique réversible, l'organe de prise de force étant lié cinématiquement de façon permanente à l'arbre de sortie de la machine électrique réversible.

Suivant un autre mode de réalisation particulièrement avantageux, le groupe électromoteur peut comporter deux machines électriques réversibles comprenant chacune un rotor avec un arbre de sortie tournant autour d'un axe de rotation, les deux arbres de sortie engrenant simultanément sur une roue dentée commune disposée parallèlement aux deux axes de rotation, le dispositif de freinage d'arbre étant en prise indirectement avec les arbres de sortie par freinage de la roue dentée commune associée. De cette manière, l'utilisation de deux machines électriques réversibles améliore la capacité de traction du véhicule fonctionnant dans le mode d'entraînement électrique permanent de l'arbre secondaire par la machine électrique réversible. L'association du dispositif de freinage d'arbre à la roue dentée commune permet de répartir le mode d'assistance de freinage du véhicule sur les deux machines électriques réversibles.

On peut alors envisager un entraînement de la prise de force par la machine électrique réversible sans recours au moteur principal du véhicule, ce qui permet d'atteindre des vitesses de rotation très nettement supérieures à 1000 tr/min, par exemple supérieures à 1500 tr/min, et le cas échéant jusqu'à 5000 tr/min.

En pratique, la boîte de transmission peut avantageusement comporter :
- une, ou de préférence plusieurs roues dentées primaires aptes à être accouplées à l'arbre primaire, par exemple par un ou plusieurs mécanismes d'accouplement et de désaccouplement, par exemple des synchroniseurs ou/ des crabots,
- plusieurs roues dentées secondaires aptes être accouplées à l'arbre secondaire, par exemple par un ou plusieurs mécanismes d'accouplement et de désaccouplement, par exemple des synchroniseurs ou/ des crabots,
- des roues dentées intermédiaires solidarisées de façon permanente à l'arbre intermédiaire, la ou les roues dentées primaires et les roues dentées secondaires engrenant chacune de façon permanente avec une roue dentée correspondante parmi les roues dentées intermédiaires pour réaliser les trains de roues dentées.

En pratique, la boîte de transmission comporte des mécanismes d'accouplement pour accoupler alternativement chacune des roues dentées primaires à l'arbre primaire, et chacune des roues dentées secondaire à l'arbre secondaire. Le cas échéant, le sous-ensemble hybride peut en outre comporter un embrayage à friction, sec ou humide, destiné à être disposé entre l'arbre primaire et le moteur principal.

Diverses configurations des roues dentées primaires, des roues dentées secondaires, de l'arbre intermédiaire et du rotor de la machine électrique réversible sont envisageables.

Suivant un mode de réalisation, l'arbre primaire et l'arbre secondaire ont des axes de révolution confondus. Alternativement ces axes sont parallèles et distants.

Suivant un exemple de réalisation, l'arbre de sortie de la machine électrique réversible a un axe de révolution parallèle à un axe de révolution de l'arbre intermédiaire, une ou plusieurs des caractéristiques suivantes étant de préférence réalisées :
- l'axe de révolution de l'arbre de sortie est confondu avec l'axe de révolution de l'arbre intermédiaire ;
- l'axe de révolution de l'arbre de sortie est distant de l'axe de révolution de l'arbre intermédiaire ;
- l'axe de révolution de l'arbre de sortie est distant d'un axe de révolution de l'arbre primaire ;
- l'axe de révolution de l'arbre de sortie est distant d'un axe de révolution de l'arbre secondaire.

Suivant un exemple de réalisation, le dispositif d'accouplement comporte un train épicycloïdal disposé cinématiquement entre l'arbre de sortie et l'arbre secondaire.

Suivant différentes variantes, le dispositif d'accouplement comporte un ou plusieurs des mécanismes d'accouplement suivants :
- un mécanisme à crabot,
- un mécanisme à synchroniseur,
- un mécanisme d'embrayage, de préférence un mécanisme d'embrayage à friction, de préférence humide,
- un double embrayage à friction, de préférence humide,
- un triple embrayage à friction, de préférence humide.

On pourra notamment envisager un mécanisme à crabot sans synchronisation dans les cas où il est prévu que la machine électrique elle-même soit utilisée pour synchroniser le dispositif d'accouplement avec la roue dentée associée.

Suivant un mode de réalisation, le sous-ensemble hybride peut être équipé d'une unité de commande de la machine électrique réversible et du dispositif d'accouplement, et des capteurs aptes à générer un signal représentatif d'une vitesse de révolution de l'arbre intermédiaire ou d'un organe qui lui est lié cinématiquement et un signal représentatif d'une vitesse de révolution de la machine électrique réversible ou d'un organe qui lui est lié cinématiquement. L'unité de commande peut notamment être mise en œuvre pour synchroniser le dispositif d'accouplement. De préférence, l'unité de commande est apte, dans un état de désaccouplement du dispositif d'accouplement, à commander la machine électrique réversible de façon qu'une vitesse de rotation relative entre l'organe d'accouplement lié cinématiquement à la machine électrique réversible et l'organe d'accouplement lié cinématiquement à l'arbre intermédiaire réalise à une condition prédéterminée, et, lorsque la condition prédéterminée est réalisée, à commander un accouplement du dispositif d'accouplement. La condition prédéterminée pourra par exemple être une vitesse de rotation relative nulle ou une vitesse relative de glissement prédéterminée.

Suivant un autre aspect de l'invention, celle-ci comporte un groupe moteur hybride avec un moteur principal, de préférence à combustion interne, et un sous-ensemble hybride tel que décrit précédemment. Le moteur principal est équipé d'un arbre moteur principal lié à l'arbre primaire directement ou par l'intermédiaire d'un embrayage ou d'un convertisseur de couple.

De préférence, l'unité de commande du dispositif d'accouplement est opérationnel pour piloter un ou plusieurs des modes de fonctionnement suivants :
- un mode d'assistance de freinage sans intervention de l'arbre intermédiaire, dans lequel on positionne le dispositif d'accouplement dans la position d'accouplement secondaire, on désaccouple l'arbre secondaire de l'arbre intermédiaire en agissant sur les mécanismes à crabot et simultanément on génère de l'énergie électrique avec la machine électrique réversible fonctionnant en génératrice et on actionne le dispositif de freinage d'arbre qui applique alors un couple de freinage sur l'arbre de sortie par l'intermédiaire de l'ensemble multidisque mis sous pression.
- un mode transitoire de maintien de la traction lors d'un passage de rapport, dans lequel on positionne le dispositif d'accouplement dans la position d'accouplement secondaire, on désaccouple le moteur principal de l'arbre intermédiaire, et on commande la machine électrique réversible de manière à générer un couple moteur sur l'arbre secondaire ou à minimiser une variation de vitesse de l'arbre secondaire alors que l'on commande un changement de rapport de la boîte de transmission ;
- un mode de ralentissement régénératif pur sans l'arbre intermédiaire, dans lequel on positionne le dispositif d'accouplement dans la position d'accouplement secondaire, on désaccouple l'arbre secondaire de l'arbre intermédiaire et on génère de l'énergie électrique avec la machine électrique réversible fonctionnant en génératrice ;
- un mode d'entraînement électrique direct sans l'arbre intermédiaire, dans lequel le dispositif d'accouplement est positionné dans la position d'accouplement secondaire, l'arbre intermédiaire est désaccouplé de l'arbre secondaire, et la machine électrique réversible est motrice.

De préférence, l'unité de commande est opérationnel pour piloter un ou plusieurs des modes de fonctionnement suivants :
- un mode de renforcement, dans lequel la boîte de transmission réalise un des rapports de transmission entre l'arbre primaire et l'arbre secondaire en passant par l'arbre intermédiaire, le moteur principal est alimenté de manière à entraîner l'arbre primaire et à exercer un couple moteur principal sur l'arbre intermédiaire, le dispositif d'accouplement est positionné dans la première position d'accouplement intermédiaire, et la machine électrique réversible génère un couple moteur de renforcement sur l'arbre intermédiaire, de même signe que le couple moteur principal ;
- un mode de recharge, dans lequel la boîte de transmission est positionnée de façon à relier l'arbre primaire à l'arbre intermédiaire, on alimente le moteur principal de manière à entraîner l'arbre primaire et à exercer un couple moteur principal sur l'arbre intermédiaire, on positionne le dispositif d'accouplement dans la première position d'accouplement intermédiaire, et on transforme de l'énergie cinétique en énergie électrique avec la machine électrique réversible fonctionnant en génératrice ;
- un mode transitoire de synchronisation de l'arbre intermédiaire lors d'un passage d'un des rapports de transmission de la boîte de transmission, dans lequel on positionne le dispositif d'accouplement dans la première position d'accouplement intermédiaire, on désaccouple le moteur principal de l'arbre intermédiaire, puis on commande la machine électrique réversible de manière à amener l'arbre intermédiaire à une vitesse de consigne permettant l'engagement de la roue dentée secondaire avant de réaccoupler le moteur principal à l'arbre intermédiaire ;
- un mode d'entraînement électrique indirect, dans lequel on positionne le dispositif d'accouplement dans la première position d'accouplement intermédiaire et on désaccouple le moteur principal de l'arbre intermédiaire alors que l'arbre intermédiaire est lié cinématiquement à l'arbre secondaire, puis on commande la machine électrique réversible en fonction d'une consigne de vitesse du véhicule ;
- un mode de freinage régénératif par l'arbre intermédiaire, dans lequel le dispositif d'accouplement est positionné dans la première position d'accouplement intermédiaire, l'arbre moteur principal est découplé de l'arbre intermédiaire et la machine électrique réversible est pilotée pour fonctionner en génératrice ;
- un mode de freinage moteur hybride, dans lequel on positionne le dispositif d'accouplement dans la première position d'accouplement intermédiaire, un des rapports de transmission entre l'arbre primaire et l'arbre secondaire passant par l'arbre de intermédiaire étant engagé, l'arbre primaire étant lié cinématiquement à l'arbre moteur principal, et l'on transforme de l'énergie cinétique en énergie électrique avec la machine électrique réversible fonctionnant en génératrice et on transforme de l'énergie cinétique en chaleur avec le moteur principal développant un couple résistant ;
- un mode d'entraînement d'une prise de force, dans lequel on positionne le dispositif d'accouplement dans la première position d'accouplement intermédiaire et on désaccouple le moteur principal de l'arbre intermédiaire, l'arbre intermédiaire de l'arbre secondaire, puis on commande la machine électrique réversible pour entraîner une prise de force accouplée à l'arbre intermédiaire.

Suivant un autre aspect de l'invention, celle-ci a trait à un procédé de freinage d'un véhicule comportant un sous ensemble hybride reprenant tout ou partie des caractéristiques mentionnées précédemment. Avec une unité de commande du dispositif d'accouplement, on pilote un mode d'assistance de freinage sans intervention de l'arbre intermédiaire, dans lequel on positionne le dispositif d'accouplement dans la position d'accouplement secondaire, on désaccouple l'arbre secondaire de l'arbre intermédiaire en agissant sur les mécanismes à crabot et simultanément on génère de l'énergie électrique avec la machine électrique réversible fonctionnant en génératrice et on actionne le dispositif de freinage d'arbre qui applique alors un couple de freinage sur l'arbre de sortie par l'intermédiaire de l'ensemble multidisque mis sous pression.

### BREVE DESCRIPTION DES FIGURES

D'autres caractéristiques et avantages de l'invention ressortiront à la lecture de la description qui suit, en référence aux figures annexées.
[Fig. 1] La figure 1 illustre un sous-ensemble hybride d'entraînement d'un véhicule suivant un premier mode de réalisation.
[Fig. 2] La figure 2 illustre le dispositif de freinage d'arbre du sous-ensemble hybride suivant le premier mode de réalisation.
[Fig. 3] La figure 3 illustre un sous-ensemble hybride d'entraînement d'un véhicule suivant un deuxième mode de réalisation.
[Fig. 4] La figure 4 illustre un sous-ensemble hybride d'entraînement d'un véhicule suivant un troisième mode de réalisation.
[Fig. 5] La figure 5 illustre un sous-ensemble hybride d'entraînement d'un véhicule suivant un quatrième mode de réalisation.
[Fig. 6] La figure 6 illustre un sous-ensemble hybride d'entraînement d'un véhicule suivant un cinquième mode de réalisation.
[Fig. 7] La figure 7 illustre un sous-ensemble hybride d'entraînement d'un véhicule suivant un sixième mode de réalisation.
[Fig. 8] La figure 8 est une vue isométrique du sous-ensemble hybride suivant le sixième mode de réalisation de la figure 7.

Pour plus de clarté, les éléments identiques ou similaires sont repérés par des signes de référence identiques sur l'ensemble des figures.

### DESCRIPTION DÉTAILLÉE DE MODES DE REALISATION

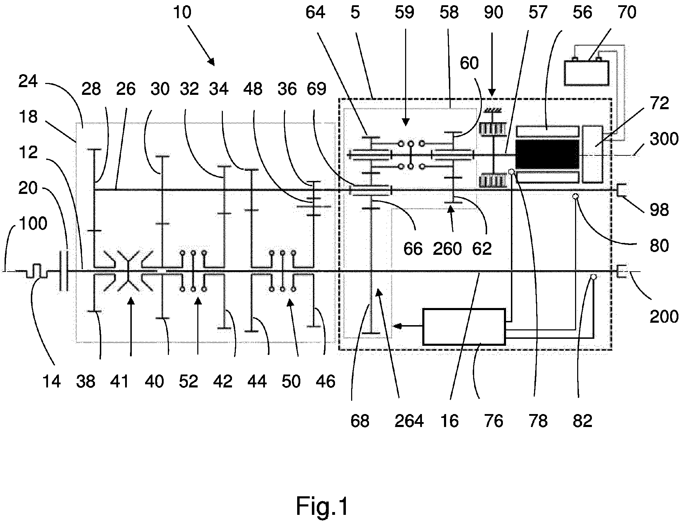

Sur la figure **1** est illustré un sous-ensemble hybride **10** d'entraînement d'un véhicule, comportant un arbre primaire **12** destiné à être entraîné par un moteur principal **14** du véhicule, par exemple un moteur thermique, un arbre secondaire **16** destiné à entraîner un ensemble d'une ou plusieurs roues motrices du véhicule (non illustré), et une boîte de transmission **18.**

La liaison du moteur principal **14** à l'arbre primaire **12** peut inclure un embrayage **20** de tout type approprié, par exemple un embrayage à glissement. La liaison de l'arbre secondaire **16** aux roues du véhicule peut inclure un ou plusieurs ponts moteurs.

La boîte de transmission **18** comporte un arbre intermédiaire **26** auquel sont solidarisées en rotation des roues dentées intermédiaires **28, 30, 32, 34, 36.** Deux roues dentées primaires **38, 40** coaxiales avec l'arbre primaire **12,** forment chacune un train d'engrenage avec une roue dentée correspondante **28,** respectivement **30,** parmi les roues dentées intermédiaires. Les engrènements des trains d'engrenages **38, 28** et **40, 30** entre roues dentées primaires **38, 40** et les roues dentées intermédiaires correspondantes **28, 30** sont permanents. Un double synchroniseur **41** à trois positions permet d'accoupler l'une ou l'autre des roues dentées primaires **38, 40** à l'arbre primaire **12,** et offre une position neutre dans laquelle aucune des roues dentées primaires **38, 40** n'est accouplée à l'arbre primaire **12.** Les différentes roues dentées et arbres primaire, secondaire et intermédiaire sont logés à l'intérieur d'une cavité d'un carter **24** de la boîte de transmission **18.**

Des roues dentées secondaires **42, 44, 46,** coaxiales avec l'arbre secondaire **16,** forment également chacune un train d'engrenage avec une roue dentée correspondante **32, 34, 36,** respectivement, parmi les roues dentées intermédiaires, l'un des trains d'engrenage étant inverseur et comportant une roue intermédiaire **48** pour réaliser un rapport de marche arrière. Les engrènements des trains d'engrenages formés par les roues dentées secondaires **42, 44, 46** et les roues dentées intermédiaires correspondantes **32, 34, 36** sont permanents. Un accouplement à crabot à trois positions sans synchroniseurs **50,** positionné entre deux des roues secondaires **44, 46,** permet soit d'accoupler à l'arbre secondaire **16** l'une ou l'autre des deux roues secondaires associées **44, 46,** soit, dans une position neutre intermédiaire, de maintenir les roues dentées secondaires associées **44, 46** découplé de l'arbre secondaire **16.**

Dans ce mode de réalisation, l'axe de révolution **100** de l'arbre primaire **12** est aligné avec l'axe de révolution **200** avec l'arbre secondaire **16,** ce qui permet d'utiliser la roue dentée primaire d'extrémité **40** alternativement comme roue primaire, associée à l'arbre primaire **12** par le synchroniseur **41,** ou comme roue secondaire associée à l'arbre secondaire **16.** À cet effet, un accouplement à crabot **52** à trois positions sans synchroniseurs, positionné entre la roue primaire d'extrémité **40** et la roue secondaire **42,** permet d'accoupler à l'arbre secondaire **16** soit la roue primaire d'extrémité **40** soit la roue secondaire **42,** et permet également, dans une position neutre intermédiaire, de maintenir la roue primaire d'extrémité **40** et la roue secondaire **42** découplées de l'arbre secondaire **16.**

On établit ainsi une boîte de transmission **18** à six rapports de marche avant et potentiellement deux rapports de marche arrière, que l'on peut le cas échéant coupler en sortie d'arbre secondaire **16** à un train épicycloïdal (non illustré) afin d'obtenir une boîte de vitesse à douze rapports.

De façon remarquable, le sous-ensemble hybride d'entraînement **10** est équipé d'un groupe électromoteur **5** comportant une machine électrique réversible **56,** dont l'arbre de sortie **57** tourne autour d'un axe de révolution **300,** et un dispositif d'accouplement **58,** comportant dans cet exemple un mécanisme à crabot **59** à trois positions sans synchroniseur et deux trains réducteurs de roues dentées **60, 62, 64, 66, 68.** Dans une position de liaison à l'arbre intermédiaire **26,** dite également position d'accouplement intermédiaire, le dispositif d'accouplement **58** réalise un accouplement en rotation de l'arbre de sortie **57** avec un réducteur de vitesse dit intermédiaire **260** comportant ici une roue dentée **60** qui engrène de façon permanente avec une roue dentée **62** solidaire de l'arbre intermédiaire **26.** Dans une position de liaison à l'arbre secondaire, dite également position d'accouplement secondaire, le dispositif d'accouplement **58** réalise un accouplement de l'arbre de sortie **57** avec un réducteur de vitesse dit secondaire **264,** comportant une roue dentée **64** qui engrène de façon permanente avec une roue dentée d'inversion **66** qui engrène elle-même de façon permanente avec une roue dentée **68** solidaire de l'arbre secondaire **16.** De façon remarquable, on peut prévoir que la roue dentée d'inversion **66** soit guidée en rotation par un palier de guidage **69** coaxial avec l'arbre intermédiaire **26.** L'arbre intermédiaire **26** peut alors supporter le palier de guidage **69.** Enfin, le dispositif d'accouplement **58,** dans une position neutre, maintient l'arbre de sortie **57** découplé des roues dentées **60, 64.** Au sein du dispositif d'accouplement **58,** le passage de la position d'accouplement intermédiaire à la position d'accouplement secondaire se fait par l'intermédiaire du mécanisme d'accouplement **59** piloté par une unité de commande **76.**

Le cas échéant, l'arbre intermédiaire **26** est équipé d'une prise de force **98,** destinée à permettre un accouplement d'un ou plusieurs accessoires du véhicule, par exemple un treuil, une pompe ou un outil. La prise de force **98** peut être par exemple un arbre de transmission comprenant une interface externe de raccordement, par exemple une cannelure.

L'arbre de sortie **57** illustré sur la figure 1 est solidaire du rotor de la machine électrique réversible **56** et constitue un arbre moteur. Alternativement, la machine électrique réversible peut intégrer un réducteur entre l'arbre de moteur et l'arbre de sortie **57.**

La machine électrique réversible **56** est alimentée par une batterie **70** par l'intermédiaire d'un convertisseur de courant **72** bidirectionnel, qui permet d'alimenter la machine électrique réversible **56** en moteur, et inversement, de faire tourner la machine électrique réversible **56** en génératrice pour alimenter la batterie **70.**

La machine électrique réversible **56** est de préférence une machine à haute tension, alimentée par exemple à une tension nominale entre 300 Volts et 800 Volts, capable de délivrer un couple et une puissance importante, comme il sera discuté plus loin. La tension nominale peut être supérieure à 800 volts.

L'unité de commande **76** permet de commander la machine électrique réversible **56** et son dispositif d'accouplement **58.** À cette unité de commande sont connectés des capteurs **78, 80, 82** pour mesurer la vitesse de révolution de l'arbre de sortie **57,** de l'arbre intermédiaire **26** et de l'arbre secondaire **16** ou des vitesses de révolution d'éléments entraînés de façon permanente par ces arbres. Cette unité de commande **76** peut être intégrée à une commande robotisée de la boîte de transmission **18** qui commande l'ouverture et la fermeture des synchroniseurs **41,** des mécanismes à crabot **50, 52,** et le cas échéant de l'embrayage principal **20,** pour répondre à une consigne de couple ou de vitesse.

La machine électrique **56** permet d'envisager plusieurs modes de fonctionnement, comme il sera discuté plus loin.

Le sous-ensemble hybride **10** comprend également un dispositif de freinage d'arbre **90** de type multidisque en prise avec l'arbre de sortie 57 et agencé pour freiner l'arbre secondaire **16** lorsque le dispositif d'accouplement **58** est dans la position d'accouplement secondaire. Le dispositif de freinage d'arbre **90** comprend un ensemble multidisques **91.** Le dispositif de freinage d'arbre **90** de type multidisque est interposé, dans le sens d'acheminement du couple, entre le rotor de la machine électrique réversible **56** et le dispositif d'accouplement **58.** Accessoirement, le dispositif de freinage d'arbre **90** est interposé axialement entre le rotor de la machine électrique réversible **56** et le dispositif d'accouplement **58.**

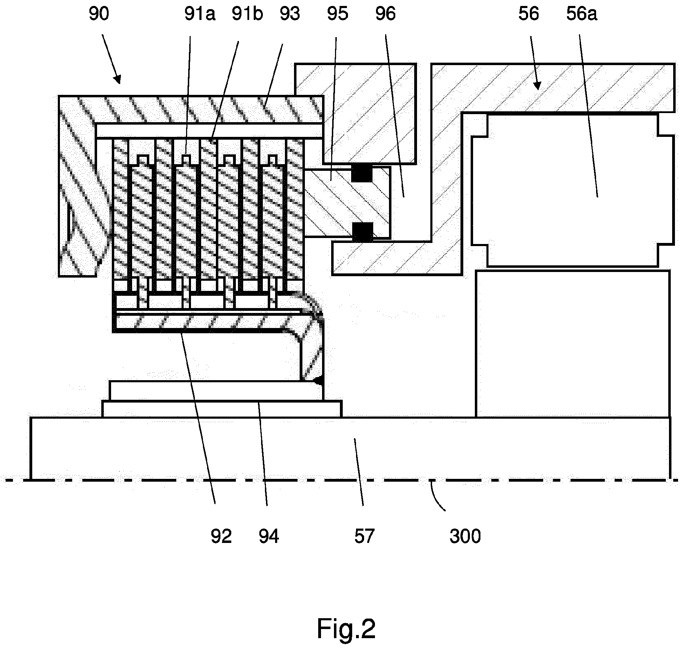

Comme illustré sur la figure 2, le dispositif de freinage d'arbre **90** de type multidisque comprend un porte-disques tournant **92** agencé pour être lié en rotation avec l'arbre de sortie **57,** un porte-disques statique **93** agencé pour être lié en rotation avec une partie fixe de la boite de transmission **18** et un ensemble multidisques **91** constitué par un premier jeu de disques **91a** en prise avec des cannelures du porte-disques tournant, et un deuxième jeu de disques **91b** en prise avec des cannelures du porte-disques statique. Par exemple, le porte-disques tournant **92** du dispositif de freinage d'arbre **90** est lié en rotation par cannelure **94** avec l'arbre de sortie **57.** Alternativement, le porte-disques tournant **92** peut être fixé rigidement sur l'arbre de sortie **57** par l'intermédiaire de vis de fixation, de rivets ou par soudure.

Dans l'exemple de mise en œuvre de l'invention de la figure 2, l'ensemble multidisques du dispositif de freinage d'arbre **90** est pressé axialement par un piston d'actionnement **95** de forme annulaire, coaxial à l'arbre de sortie **57** de la machine électrique réversible **56.** Le piston d'actionnement **95** est guidé axialement au sein d'une chambre de pression **96** formée directement ou indirectement dans le stator **56a** de la machine électrique réversible **56.**

Alternativement, le piston d'actionnement **95** peut être guidé axialement au sein d'une chambre de pression **96** formée directement ou indirectement dans le carter de la boite de transmission **18.**

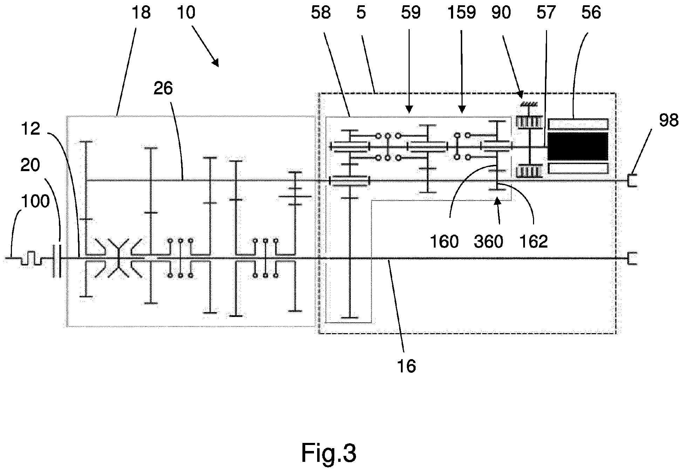

Sur la figure 3 est illustré un sous-ensemble hybride **10** selon un deuxième exemple de réalisation de l'invention, qui diffère de l'exemple de réalisation de la figure 1 par le fait que le dispositif d'accouplement **58** comporte, en plus du mécanisme d'accouplement à crabot à trois positions **59,** un mécanisme d'accouplement à crabot à deux positions **159,** qui réalise un accouplement en rotation de l'arbre de sortie **57** avec un deuxième réducteur de vitesse intermédiaire **360** comportant une roue dentée **160** qui engrène de façon permanente avec une roue dentée **162** solidaire de l'arbre intermédiaire **26.** Le rapport de transmission réalisé par l'engrenage des roues dentées **160, 162** est différent du rapport de transmission de l'engrenage des roues dentées **60, 62.** Le mécanisme d'accouplement **159,** dans une position neutre, maintient l'arbre de sortie **57** découplé de la roue dentée **160.**

L'homme du métier comprendra, sans qu'il soit nécessaire de l'illustrer dans le détail, qu'il pourrait le cas échéant multiplier les rapports de transmission entre l'arbre de sortie **57** et l'arbre intermédiaire en ajoutant des réducteurs de vitesses entre les mécanismes d'accouplement **59, 159** et l'arbre intermédiaire **26.** De façon analogue, il serait possible de multiplier les rapports de transmission entre l'arbre de sortie **57** et l'arbre secondaire **16** en ajoutant des mécanismes d'accouplement et des réducteurs de vitesses entre l'arbre de sortie **57** et l'arbre secondaire **16.**

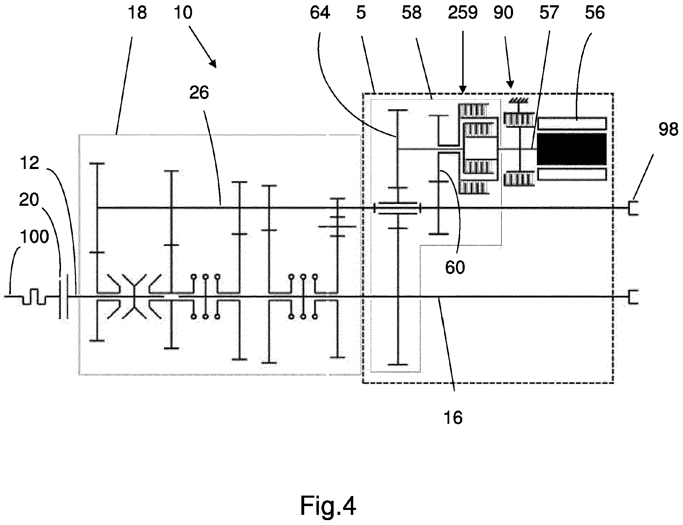

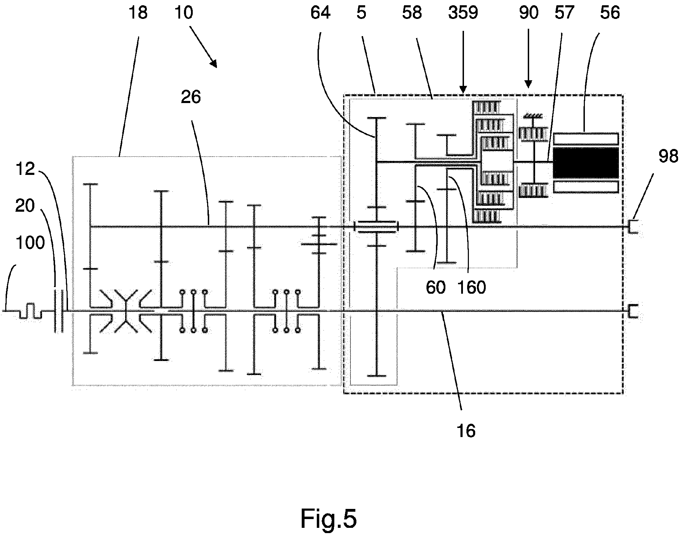

Les mécanismes d'accouplement **59, 159** du dispositif d'accouplement **58** peuvent être de tout type, notamment à crabot avec ou sans synchronisation ou à friction. Sur la figure 4 est ainsi illustré un troisième exemple de réalisation de l'invention, qui diffère de l'exemple de réalisation de la figure 1 par le fait que le dispositif d'accouplement **58** comporte un mécanisme d'accouplement du type à double embrayage à friction humide **259.** Sur la figure 5, le dispositif d'accouplement **58** comporte un mécanisme d'accouplement du type à triple embrayage à friction humide **359,** réalisant les mêmes rapports de transmission que l'exemple de réalisation de la figure 3.

Dans les exemples de réalisation de l'invention selon les figures 3 et 5, le dispositif d'accouplement comprend une pluralité de positions d'accouplement et de désaccouplement, notamment trois positions d'accouplement distinctes, permettant une transmission de puissance en provenance de la machine électrique réversible vers l'arbre intermédiaire ou l'arbre secondaire selon des rapports de transmission différents. Le dispositif d'accouplement comprend notamment une première position d'accouplement intermédiaire, une deuxième position d'accouplement intermédiaire autrement appelé position d'accouplement intermédiaire supplémentaire et une position d'accouplement secondaire. Dans la deuxième position d'accouplement intermédiaire, le dispositif d'accouplement **58** lie cinématiquement la machine électrique réversible **56** à l'arbre intermédiaire **26** avec un deuxième rapport de transmission intermédiaire distinct du premier rapport de transmission intermédiaire.

Les divers exemples de réalisation décrits ont en commun un dispositif d'accouplement **58** apte prendre au moins une première position d'accouplement dite intermédiaire dans laquelle la machine électrique réversible **56** est liée cinématiquement à l'arbre intermédiaire, et au moins une position d'accouplement secondaire dans laquelle la machine électrique réversible **56** est liée cinématiquement à l'arbre secondaire **16** sans passer par l'arbre intermédiaire **26.** On peut exploiter ces divers accouplements pour réaliser une grande variété de modes de fonctionnement, comme il va être discuté à présent.

Tout d'abord, plusieurs modes de fonctionnement peuvent être mis en œuvre alors que le dispositif d'accouplement **58** relie l'arbre de sortie **57** à l'arbre secondaire **16** sans intervention de l'arbre intermédiaire **26.**

On peut envisager un mode d'assistance de freinage sans intervention de l'arbre intermédiaire **26,** dans lequel on positionne le dispositif d'accouplement **58** dans la position d'accouplement secondaire, on désaccouple l'arbre secondaire **16** de l'arbre intermédiaire **26** en agissant sur les mécanismes à crabot **50, 52** et simultanément on génère de l'énergie électrique avec la machine électrique réversible **56** fonctionnant en génératrice et on actionne le dispositif de freinage d'arbre **90** qui applique alors un couple de freinage sur l'arbre de sortie **57** par l'intermédiaire de l'ensemble multidisque **91** mis sous pression. Ce mode d'assistance de freinage peut être avantageux lorsque le véhicule se trouve sur une pente à faible pourcentage et pour lequel le conducteur ne veut pas utiliser son système de freinage principal. Dans ce mode d'assistance de freinage, la capacité de freinage du dispositif de freinage d'arbre 90 de type multidisque est comprise entre 20 % et 60 % de la capacité de freinage de la machine électrique réversible **56.**

On peut également envisager un mode de freinage régénératif pur sans l'arbre intermédiaire **26,** dans lequel on positionne le dispositif d'accouplement dans la position d'accouplement secondaire, on désaccouple l'arbre secondaire **16** de l'arbre intermédiaire **26** en agissant sur les mécanismes à crabot **50, 52** et on génère de l'énergie électrique avec la machine électrique réversible **56** fonctionnant en génératrice. Pour réaliser de façon optimale ce mode de freinage régénératif sans le moteur principal, il est avantageux que la machine électrique réversible puisse développer un couple résistant supérieur à 400 Nm et de préférence supérieur à 450Nm dans une plage de vitesse de plus de 3000 tr/min, et de préférence de plus de 4000 tr/min ayant une borne inférieure qui est inférieure à 6500 tr/min, et de préférence inférieure à 6000 tr/min et une borne supérieure qui est supérieure à 9000 tr/min, et de préférence supérieure à 10000 tr/min, ceci pendant 30 secondes au moins.

De façon particulièrement avantageuse, d'autres modes de fonctionnement peuvent être envisagés alors que le dispositif d'accouplement **58** relie l'arbre de sortie **57** à l'arbre secondaire **16.**

On peut ainsi mettre en œuvre un mode transitoire de maintien de la traction lors d'un passage de rapport, dans lequel on positionne le dispositif d'accouplement **58** dans la position d'accouplement secondaire, on désaccouple le moteur principal **14** de l'arbre intermédiaire **26,** et on commande la machine électrique réversible **56** de manière à générer un couple moteur sur l'arbre secondaire **16** ou à minimiser une variation de vitesse de l'arbre secondaire alors que l'on commande un changement de rapport de la boîte de transmission **18** entre le moteur principal **14** et l'arbre intermédiaire **26** et/ou entre l'arbre intermédiaire **26** et l'arbre secondaire **16.**

Le mode transitoire de maintien de la traction lors d'un passage de rapport et le mode de freinage régénératif pur sans l'arbre intermédiaire **26** sont des modes de fonctionnement transitoire, n'ayant pas vocation à durer plus d'une trentaine de seconde. À titre indicatif, avec un rapport de transmission de l'ordre de 8 entre l'arbre de sortie **57** et l'arbre secondaire **16,** on a avantage à dimensionner la machine électrique réversible pour développer un couple résistant supérieur à 400 Nm et de préférence supérieur à 450Nm dans une plage de vitesse de plus de 3000 tr/min, et de préférence de plus de 4000 tr/min ayant une borne inférieure qui est inférieure à 6500 tr/min, et de préférence inférieure à 6000 tr/min et une borne supérieure qui est supérieure à 9000 tr/min, et de préférence supérieure à 10000 tr/min, pendant 30 secondes.

On peut enfin mettre en œuvre un mode d'entraînement électrique direct sans l'arbre intermédiaire **26,** dans lequel le dispositif d'accouplement **58** est positionné dans la position d'accouplement secondaire et l'arbre intermédiaire **26** est désaccouplé de l'arbre secondaire **16** au niveau des mécanismes à crabot **50, 52,** la machine électrique réversible agissant de façon motrice ou régénérative suivant les besoins d'accélération ou de freinage. Ce mode de fonctionnement est moins flexible que le mode d'entraînement électrique avec l'arbre intermédiaire puisqu'on ne dispose de la pluralité de rapports de transmission de la boîte de transmission **18.** Mais il peut être utilisé en complément de cette dernière, en offrant un rapport de transmission directe entre arbre de sortie **57** et arbre secondaire **16** plus élevé que les rapports de transmission utilisant la boîte de transmission **18.** À titre indicatif, on peut par exemple développer deux rapports ayant une valeur de l'ordre de 4 et de 6 respectivement, avec les crabots **50, 52** de la boîte de transmission **18** combinés avec le train de roues dentées **60, 62** du dispositif d'accouplement **58,** et un rapport de transmission supplémentaire ayant une valeur de l'ordre de 8 par le train de roues dentées **64, 66, 68** du dispositif d'accouplement **58.**

Ensuite, plusieurs modes de fonctionnement peuvent être mis en œuvre alors que le dispositif d'accouplement **58** relie l'arbre de sortie **57** à l'arbre intermédiaire **26.**

Dans un mode transitoire de synchronisation de l'arbre intermédiaire lors d'un passage de rapport, on positionne le dispositif d'accouplement **58** dans la première position d'accouplement intermédiaire, on désaccouple le moteur principal **14** de l'arbre intermédiaire **26** soit au niveau de l'embrayage **20,** soit au niveau du mécanisme à crabot **41,** puis on commande la machine électrique réversible **56** de manière à amener l'arbre intermédiaire **26** à une vitesse de consigne permettant l'engagement de la roue dentée secondaire avant de réaccoupler le moteur principal **14** à l'arbre intermédiaire **26.** Durant ces phases transitoires, la machine électrique réversible **56** permet ainsi d'adapter la vitesse de révolution de l'arbre intermédiaire aux besoins de synchronisation lors des commutations des mécanismes à crabot **50, 52** ou des synchroniseurs **41.** Dans ces phases, la machine électrique réversible peut être utilisée alternativement comme moteur électrique pour augmenter la vitesse de révolution de l'arbre intermédiaire **26** ou comme génératrice pour diminuer cette vitesse. Cette adaptation de la vitesse de l'arbre intermédiaire **26** permet de réduire les temps de crabotage ou de synchronisation, sans avoir recours à un frein de boîte.

Dans un mode de recharge, on accouple une des roues dentées primaires **38, 40** à l'arbre primaire **12,** on alimente le moteur principal **14** de manière à entraîner l'arbre primaire **12** et à exercer un couple moteur principal sur l'arbre intermédiaire **26,** on positionne le dispositif d'accouplement **58** dans la première position d'accouplement intermédiaire, et on transforme de l'énergie cinétique en énergie électrique avec la machine électrique réversible fonctionnant en génératrice. La recharge peut avoir lieu alors que l'arbre intermédiaire **26** entraîne l'arbre secondaire **16** ou sans liaison à l'arbre secondaire **16.**

Dans un mode de renforcement, l'une des roues dentées secondaires **42, 44, 46** est accouplée à l'arbre secondaire **16,** l'une des roues dentées primaire **38, 40** est accouplée à l'arbre primaire, le moteur principal **14** est alimenté de manière à entraîner l'arbre primaire **12** et à exercer un couple moteur principal sur l'arbre intermédiaire **26,** et le dispositif d'accouplement **58** est positionné la première position d'accouplement intermédiaire ou l'une des positions d'accouplement intermédiaire s'il en existent plusieurs, et la machine électrique réversible génère un couple moteur de renforcement sur l'arbre intermédiaire, de même signe que le couple moteur principal. L'apport de puissance supplémentaire pour la traction du véhicule est réalisé avec un rapport de transmission (pour les exemples de réalisation des figures 1 et 4), deux rapports de transmission (pour les exemples de réalisation des figures 3 et 5), voire davantage.

Dans un mode d'entraînement électrique pur passant par l'arbre intermédiaire **26,** on positionne le dispositif d'accouplement **58** dans la première position d'accouplement intermédiaire et on désaccouple le moteur principal **14** de l'arbre intermédiaire **26** alors que l'une des roues dentées secondaires **42, 44, 46** est accouplée à l'arbre secondaire **16,** puis on commande la machine électrique réversible en fonction d'une consigne de vitesse du véhicule. À titre indicatif, pour mettre en œuvre un tel mode d'entraînement électrique du véhicule, il est avantageux que la machine électrique réversible puisse développer de façon continue un couple moteur supérieur à 300 Nm, et de préférence supérieure à 350Nm, dans une plage de vitesse de plus de 1000 tr/min, et de préférence de plus de 2000 tr/min comprise ayant une borne inférieure qui est inférieure à 6000 tr/min, et de préférence inférieure à 5000 tr/min, et une borne supérieure qui est supérieure à 6000 tr/min, de préférence supérieure à 7000 tr/min, et de préférence supérieure à 9000 tr/min. Avec une telle plage de fonctionnement, combinée avec plusieurs rapports de transmission compris entre 4 et 8 réalisés par les engrènements des roues dentées **32** et **42, 34** et **44, 60, 62** et le cas échéant **160, 162,** on peut envisager un fonctionnement électrique du véhicule en mode urbain.

Dans un mode de freinage régénératif passant par l'arbre intermédiaire, le dispositif d'accouplement **58** est positionné dans la première position d'accouplement intermédiaire, le moteur principal **14** est découplé de l'arbre intermédiaire **26,** au niveau de l'embrayage **20** ou des synchronisateurs **41,** l'un des crabots **50, 52** est engagé pour relier l'arbre intermédiaire **26** à l'arbre secondaire **16** et la machine électrique réversible **56** est pilotée pour fonctionner en génératrice.

Dans un mode de freinage moteur hybride, on positionne le dispositif d'accouplement **58** dans la première position d'accouplement intermédiaire, on maintient une liaison cinématique entre le moteur principal **14,** l'arbre intermédiaire **26** et l'arbre secondaire **16,** on transforme une partie de l'énergie cinétique transmise par l'arbre secondaire **16** en énergie électrique avec la machine électrique réversible **56** fonctionnant en génératrice et on transforme une partie de l'énergie cinétique transmise par l'arbre secondaire **16** en chaleur avec le moteur principal **14** développant un couple résistant. Ce mode de fonctionnement permet d'atteindre un couple de freinage plus important qu'avec le moteur principal **14** seul.

On peut également utiliser la machine électrique réversible **56** en moteur pour entraîner la prise de force **98** alors que la boîte de transmission **18** est en position neutre pour interrompre la liaison entre l'arbre intermédiaire **26** et l'arbre primaire **12** d'une part, et entre l'arbre intermédiaire **26** et l'arbre secondaire **16** d'autre part.

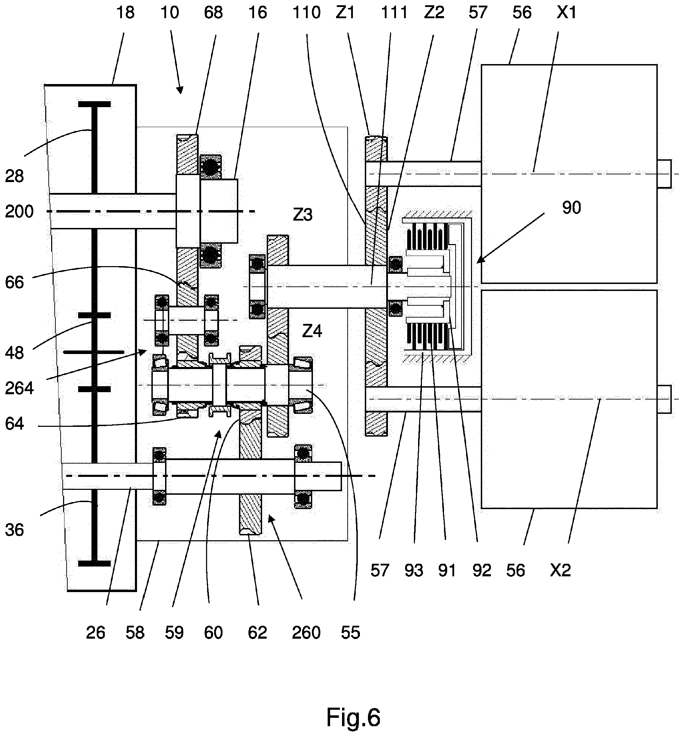

Sur la figure 6 est illustré un cinquième mode de réalisation de l'invention, qui diffère du premier mode de réalisation par l'utilisation de deux machines électriques réversible **56,** chaque machine électrique comprenant un stator et un rotor présentant un arbre de sortie mobile en rotation autour d'un axe.

Les machines électriques réversibles **56** sont du même type et sont par exemple des machines synchrones à aimants permanents. Chaque machine électrique fournit une même puissance nominale mécanique.

Comme on peut le voir sur la figure 6, la première machine électrique **56** présente dans l'exemple décrit un rotor avec un premier arbre de sortie **57** tournant autour d'un premier axe de rotation **X1,** la deuxième machine électrique **56** présente un rotor avec un deuxième arbre de sortie **57** tournant autour d'un deuxième axe de rotation **X2.** Dans l'exemple décrit, les axes de rotation des machines électriques réversibles sont parallèles mais non confondus, les deux machines électriques **56a, 56b** n'ayant pas leurs axes de rotation alignés.

Les arbres de sortie **57** des deux machines électriques engrènent simultanément sur une roue dentée commune **110** disposée entre les axes **X1, X2.** La roue dentée commune **110** est liée cinématiquement aux deux arbres de sortie et reçoit le couple moteur fourni par les deux machines électriques, celles-ci étant réparties autour de la roue dentée commune **110** de sorte à former un premier réducteur de vitesse **Z1, Z2.** La roue dentée commune **110** est liée cinématiquement avec un arbre de transmission **55** spécifique au dispositif d'accouplement **58** de ce cinquième mode de réalisation de l'invention à l'aide d'un deuxième réducteur de vitesse **Z3, Z4.**

De manière similaire au premier mode de réalisation, le dispositif d'accouplement **58** comporte un mécanisme à crabot **59** à trois positions sans synchroniseur et deux trains réducteurs de roues dentées **60, 62, 64, 66, 68.** Dans une position de liaison à l'arbre intermédiaire **26,** dite également position d'accouplement intermédiaire, le dispositif d'accouplement **58** réalise un accouplement en rotation de l'arbre de transmission **55** avec un réducteur de vitesse dit intermédiaire **260** comportant ici une roue dentée **60** qui engrène de façon permanente avec une roue dentée **62** solidaire de l'arbre intermédiaire **26.** Dans une position de liaison à l'arbre secondaire, dite également position d'accouplement secondaire, le dispositif d'accouplement **58** réalise un accouplement de l'arbre de transmission **55** avec un réducteur de vitesse dit secondaire **264,** comportant une roue dentée **64** qui engrène de façon permanente avec une roue dentée d'inversion **66** qui engrène elle-même de façon permanente avec une roue dentée **68** solidaire de l'arbre secondaire **16.**

Le sous-ensemble hybride **10** comprend également un dispositif de freinage d'arbre **90** de type multidisque en prise avec les arbres de sortie **57** des deux machines électriques par l'intermédiaire de la roue dentée commune **110** et agencé pour freiner l'arbre secondaire **16** lorsque le dispositif d'accouplement **58** est dans la position d'accouplement secondaire. Le dispositif de freinage d'arbre **90** comprend un ensemble multidisques **91.** Le dispositif de freinage d'arbre **90** de type multidisque est interposé, dans le sens d'acheminement du couple, entre le rotor de la machine électrique réversible **56** et le dispositif d'accouplement **58.**

Comme illustré sur la figure 6, le dispositif de freinage d'arbre **90** de type multidisque comprend un porte-disques tournant **92** agencé pour être lié en rotation avec la roue dentée commune **110** d'axe de rotation **111,** un porte-disques statique **93** agencé pour être lié en rotation avec une partie fixe de la boite de transmission et un ensemble multidisques **91** constitué par un premier jeu de disques en prise avec des cannelures du porte-disques tournant, et un deuxième jeu de disques en prise avec des cannelures du porte-disques statique. Par exemple, le porte-disques tournant **92** du dispositif de freinage d'arbre **90** est lié en rotation par cannelure avec la roue dentée commune **110.**

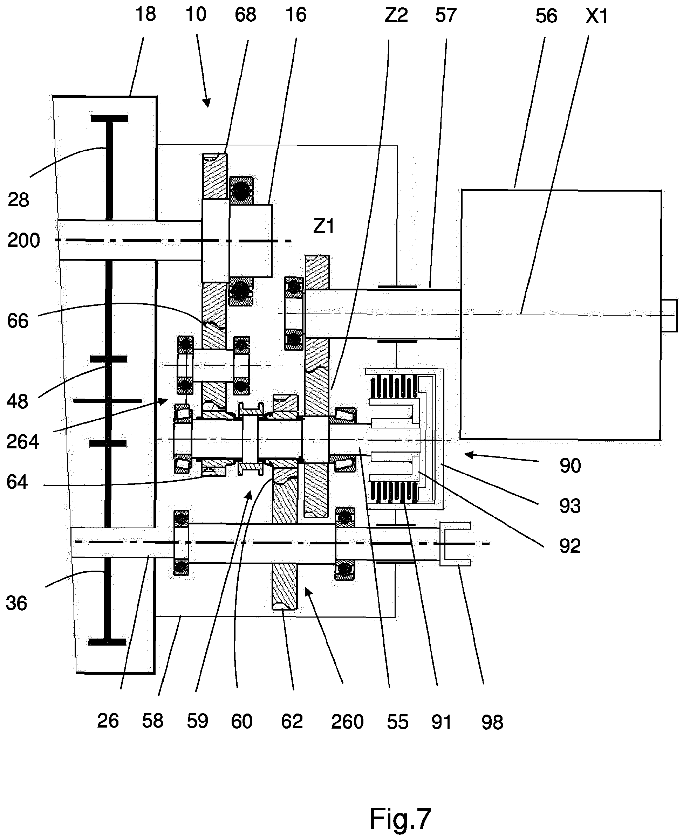

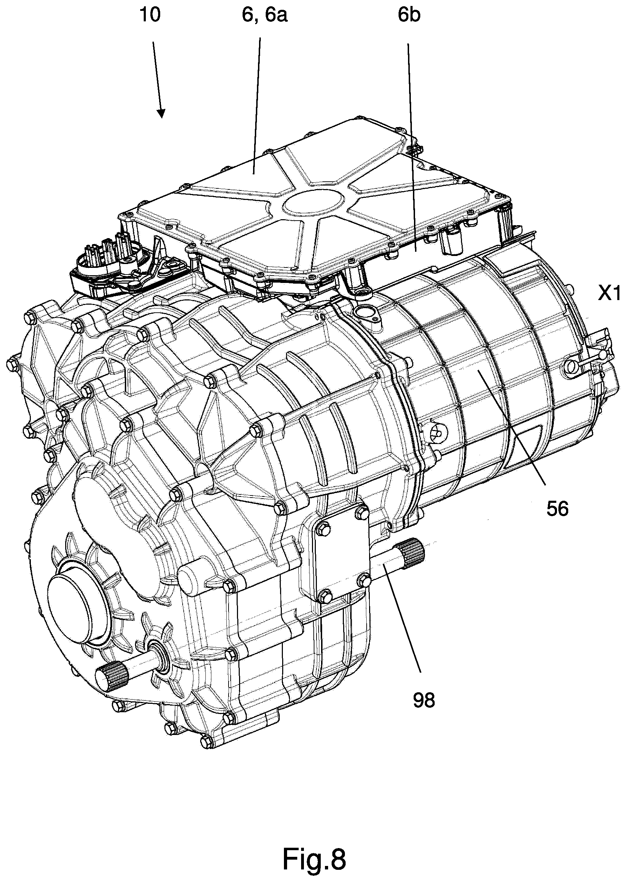

Les figures 7 et 8 illustrent un sixième mode de réalisation de l'invention, qui diffère du premier mode de réalisation par le fait que le dispositif de freinage d'arbre **90** est en prise indirecte avec l'arbre de sortie **57** de la machine électrique réversible **56,** notamment par l'utilisation d'un réducteur de vitesse.

La machine électrique réversible **56** comprend un arbre de sortie **57** tournant autour d'un axe de rotation **X1,** celui-ci entrainant en rotation un arbre de transmission **55** par l'intermédiaire d'un premier réducteur de vitesse **Z1, Z2.** L'arbre de transmission **55** comprend un dispositif d'accouplement **58.**

De manière similaire au premier mode de réalisation, le dispositif d'accouplement **58** comporte un mécanisme à crabot **59** à trois positions sans synchroniseur et deux trains réducteurs de roues dentées **60, 62, 64, 66, 68.** Dans une position de liaison à l'arbre intermédiaire **26,** dite également position d'accouplement intermédiaire, le dispositif d'accouplement **58** réalise un accouplement en rotation de l'arbre de transmission **55** avec un réducteur de vitesse dit intermédiaire **260** comportant ici une roue dentée **60** qui engrène de façon permanente avec une roue dentée **62** solidaire de l'arbre intermédiaire **26.** Dans une position de liaison à l'arbre secondaire, dite également position d'accouplement secondaire, le dispositif d'accouplement **58** réalise un accouplement de l'arbre de transmission **55** avec un réducteur de vitesse dit secondaire **264,** comportant une roue dentée **64** qui engrène de façon permanente avec une roue dentée d'inversion **66** qui engrène elle-même de façon permanente avec une roue dentée **68** solidaire de l'arbre secondaire **16.**

Le sous-ensemble hybride **10** comprend également un dispositif de freinage d'arbre **90** de type multidisque en prise avec l'arbre de transmission **55** et agencé pour freiner l'arbre secondaire **16** lorsque le dispositif d'accouplement **58** est dans la position d'accouplement secondaire. Le dispositif de freinage d'arbre **90** comprend un ensemble multidisques **91.** Le dispositif de freinage d'arbre **90** de type multidisque est interposé, dans le sens d'acheminement du couple, entre le rotor de la machine électrique réversible **56** et le dispositif d'accouplement **58.**

Comme illustré sur la figure 7, le dispositif de freinage d'arbre **90** de type multidisque comprend un porte-disques tournant **92** en prise avec l'arbre de transmission **55,** un porte-disques statique **93** agencé pour être lié en rotation avec une partie fixe de la boite de transmission et un ensemble multidisques **91** constitué par un premier jeu de disques en prise avec des cannelures du porte-disques tournant, et un deuxième jeu de disques en prise avec des cannelures du porte-disques statique. Par exemple, le porte-disques tournant **92** du dispositif de freinage d'arbre **90** est lié en rotation par cannelure avec l'arbre de transmission **55.**

Dans cet exemple, le dispositif de freinage d'arbre **90** est en prise indirecte avec l'arbre de sortie **57** de la machine électrique réversible par utilisation d'un réducteur de vitesse **Z1, Z2,** le porte-disques tournant **92** étant solidaire en rotation du pignon de sortie **Z2** du réducteur de vitesse. Dans cet exemple, le dimensionnement du dispositif de freinage d'arbre prend en compte le rapport de réduction associé au réducteur de vitesse **Z1, Z2.** Le risque de centrifugation de l'ensemble multidisques **91** du dispositif de freinage d'arbre **90** est limité du fait de la réduction de la vitesse de rotation.

L'arbre intermédiaire **26** est équipé d'une prise de force **98,** destinée à permettre un accouplement d'un ou plusieurs accessoires du véhicule, par exemple un treuil, une pompe ou un outil. La prise de force **98** peut être par exemple un arbre de transmission comprenant une interface externe de raccordement, par exemple une cannelure comme illustré sur la figure 8.

Comme illustré sur la figure 8, la machine électrique est ici alimentée électriquement par un onduleur **6** de transformation de courant électrique continu en courant électrique alternatif, l'onduleur comprenant un ensemble **6a** de composants électriques pour ladite transformation et un boîtier **6b** de protection accueillant l'ensemble de composants électriques. Le boîtier **6b** de protection de l'onduleur est intégré directement dans le carter de protection de la machine électrique réversible **56.**

Avantageusement, l'onduleur **6** est disposé axialement selon l'axe **X1** parallèlement à la machine électrique réversible **56.** L'arbre de transmission de la prise de force **98** est également orienté parallèlement à l'axe **X1** de la machine électrique réversible **56.**

## Revendications

1. Sous-ensemble hybride (10) d'entraînement d'un véhicule, comportant :
• au moins un arbre primaire (12) ;
• au moins un arbre secondaire (16) ;
• une boîte de transmission (18) comportant au moins un arbre intermédiaire (26) distinct de l'arbre primaire (12) et de l'arbre secondaire (16) et des trains de roues dentées (38, 28, 40, 30, 32, 42, 36, 48, 44, 46) pour réaliser plusieurs rapports de transmission entre l'arbre primaire (12) et l'arbre secondaire (16) en passant par l'arbre intermédiaire (26) ;
• un groupe électromoteur (5) comportant au moins une machine électrique réversible (56), et un dispositif d'accouplement (58) qui, dans au moins une position d'accouplement secondaire, lie cinématiquement l'arbre de sortie (57) de la machine électrique réversible (56) à l'arbre secondaire (16) sans passer par l'arbre intermédiaire (26),
**caractérisé en ce que** le sous-ensemble hybride comprend un dispositif de freinage d'arbre (90) de type multidisque en prise avec l'arbre de sortie (57) pour freiner l'arbre secondaire (16) lorsque le dispositif d'accouplement est dans la position d'accouplement secondaire.

2. Sous-ensemble hybride (10) selon la revendication 1, **caractérisé en ce que** le dispositif de freinage d'arbre (90) de type multidisque est interposé axialement entre le rotor de la machine électrique réversible (56) et le dispositif d'accouplement (58).

3. Sous-ensemble hybride (10) selon la revendication 1 ou 2, **caractérisé en ce que** le dispositif de freinage d'arbre (90) de type multidisque comprend un porte-disques tournant (92) agencé pour être lié en rotation avec l'arbre de sortie (57), un porte-disques statique (93) agencé pour être lié en rotation avec une partie fixe de la boite de transmission (18) et un ensemble multidisques (91) constitué par un premier jeu de disques (91a) en prise avec des cannelures du porte-disques tournant, et un deuxième jeu de disques (91b) en prise avec des cannelures du porte-disques statique.

4. Sous-ensemble hybride (10) selon la revendication précédente, **caractérisé en ce que** le porte-disques tournant (92) du dispositif de freinage d'arbre (90) est lié en rotation par cannelure (94) avec l'arbre de sortie (57) ou fixé rigidement sur l'arbre de sortie par l'intermédiaire de vis de fixation, de rivets ou par soudure.

5. Sous-ensemble hybride (10) selon l'une des revendications précédentes, **caractérisé en ce que** l'ensemble multidisques du dispositif de freinage d'arbre (90) est pressé axialement par un piston d'actionnement (95) de forme annulaire, coaxial à l'arbre de sortie (57) de la machine électrique réversible (56), le piston d'actionnement (95) étant guidé axialement au sein d'une chambre de pression (96) formée directement ou indirectement dans un stator (56a) de la machine électrique réversible (56).

6. Sous-ensemble hybride (10) selon l'une des revendications précédentes, **caractérisé en ce que** le dispositif d'accouplement (58) comprend plusieurs positions d'accouplement, dont une première position d'accouplement intermédiaire, distincte de la position d'accouplement secondaire, qui lie cinématiquement l'arbre de sortie (57) de la machine électrique réversible (56) à l'arbre intermédiaire (26), et le dispositif de freinage d'arbre de type multidisque en prise avec l'arbre de sortie (57) du sous-ensemble hybride est agencé pour freiner l'arbre intermédiaire lorsque le dispositif d'accouplement est dans la première position d'accouplement intermédiaire.

7. Sous-ensemble hybride (10) selon l'une des revendications précédentes, **caractérisé en ce que** le dispositif d'accouplement (58), dans au moins une position de désaccouplement, désaccouple cinématiquement de manière simultanée l'arbre de sortie (57) de la machine électrique réversible (56) à l'arbre intermédiaire (26) et à l'arbre secondaire (16).

8. Sous-ensemble hybride (10) selon l'une des revendications précédentes, **caractérisé en ce que** le dispositif d'accouplement (58) comprend au moins un mécanisme d'accouplement (59, 159, 259, 359) lié cinématiquement de façon permanente à l'arbre de sortie (57) de la machine électrique réversible (56), un réducteur de vitesse intermédiaire (260, 360) lié cinématiquement de façon permanente à l'arbre intermédiaire (26) et un réducteur de vitesse secondaire (264) liée cinématiquement de façon permanente à l'arbre secondaire (16).

9. Sous-ensemble hybride (10) selon la revendication précédente, **caractérisé en ce que** le réducteur de vitesse secondaire (264) comprend une roue dentée d'inversion (66) guidée en rotation par un palier de guidage (69) coaxial avec l'arbre intermédiaire (26).

10. Sous-ensemble hybride (10) selon la revendication 6, **caractérisé en ce que** le dispositif d'accouplement (58) dans la première position d'accouplement intermédiaire lie cinématiquement l'arbre de sortie (57) de la machine électrique réversible (56) à l'arbre intermédiaire (26) avec un rapport de transmission intermédiaire, le dispositif d'accouplement (58) dans la position d'accouplement secondaire lie cinématiquement la machine électrique réversible (56) à l'arbre secondaire (16) avec un rapport de transmission secondaire, et **en ce que** au moins un des critères suivants est rempli :
- le rapport de transmission secondaire est supérieur à 6, et de préférence supérieur ou égal à 8 ;
- le rapport de transmission intermédiaire est supérieur à 4, et de préférence supérieur ou égal à 6 entre l'arbre intermédiaire (26) et l'arbre de sortie (57) de de la machine électrique réversible (56) ;
- le rapport de transmission secondaire est strictement supérieur au rapport de transmission intermédiaire, de préférence avec un facteur supérieur ou égal à 1,5 entre le rapport de transmission secondaire et le rapport de transmission intermédiaire.

11. Sous-ensemble hybride (10) selon la revendication 6, **caractérisé en ce que** le dispositif d'accouplement (58), dans une position d'accouplement intermédiaire supplémentaire, lie cinématiquement la machine électrique réversible (56) à l'arbre intermédiaire (26) avec un rapport de transmission intermédiaire supplémentaire distinct d'un rapport de transmission intermédiaire.

12. Sous-ensemble hybride (10) selon l'une des revendications précédentes, **caractérisé en ce que** l'arbre de sortie (57) de la machine électrique réversible (56) a un axe de révolution (300) parallèle à un axe de révolution de l'arbre intermédiaire (26), une des caractéristiques suivantes étant de préférence réalisées :
- l'axe de révolution (300) de l'arbre de sortie (57) est confondu avec l'axe de révolution de l'arbre intermédiaire (26) ;
- l'axe de révolution (300) de l'arbre de sortie (57) est distant de l'axe de révolution de l'arbre intermédiaire (26) ;
- l'axe de révolution (300) de l'arbre de sortie (57) est distant d'un axe de révolution (100) de l'arbre primaire (12) ;
- l'axe de révolution (300) de l'arbre de sortie (57) est distant d'un axe de révolution de l'arbre secondaire (16).

13. Sous-ensemble hybride selon l'une des revendications précédentes, **caractérisé en ce que** le dispositif d'accouplement (58) comporte un ou plusieurs des mécanismes d'accouplement suivants :
- un mécanisme à crabot (59, 159),
- un mécanisme à synchroniseur,
- un mécanisme d'embrayage (259, 359), de préférence un mécanisme d'embrayage à friction, de préférence humide,
- un double embrayage à friction (259), de préférence humide,
- un triple embrayage à friction (359), de préférence humide.

14. Sous-ensemble hybride (10) selon l'une des revendications précédentes, **caractérisé en ce que** le groupe électromoteur comporte deux machines électriques réversibles (56) comprenant chacune un rotor avec un arbre de sortie (57) tournant autour d'un axe de rotation (X1, X2), les deux arbres de sortie (57) engrenant simultanément sur une roue dentée commune (110) disposée parallèlement aux deux axes de rotation (X1, X2), le dispositif de freinage d'arbre (90) étant en prise indirectement avec les arbres de sortie (57) par freinage de la roue dentée commune (110) associée.

15. Sous-ensemble hybride (10) selon la revendication 3, **caractérisé en ce que** le dispositif de freinage d'arbre (90) est en prise indirecte avec l'arbre de sortie (57) de la machine électrique réversible par utilisation d'un réducteur de vitesse (Z1, Z2), le porte-disques tournant (92) étant solidaire en rotation du pignon de sortie (Z2) du réducteur de vitesse.

## Patentansprüche

1. Hybrid-Unterbaugruppe (10) zum Antrieb eines Fahrzeugs, mit:
• mindestens eine Primärwelle (12);
• mindestens eine Sekundärwelle (16);
• ein Getriebegehäuse (18) mit mindestens einer von der Primärwelle (12) und der Sekundärwelle (16) getrennten Zwischenwelle (26) und Zahnradsätzen (38, 28, 40, 30, 32, 42, 36, 48, 44, 46) zur Herstellung mehrerer Übersetzungsverhältnisse zwischen der Antriebswelle (12) und der Abtriebswelle (16) über die Zwischenwelle (26);
• ein Elektromotoraggregat (5) mit mindestens einer reversiblen elektrischen Maschine (56) und einer Kupplungsvorrichtung (58), die in mindestens einer sekundären Kupplungsstellung die Abtriebswelle (57) der reversiblen elektrischen Maschine (56) kinematisch mit der Sekundärwelle (16) ohne Umweg über die Zwischenwelle (26),
**dadurch gekennzeichnet, dass** die Hybrid-Unterbaugruppe eine mit der Abtriebswelle (57) in Eingriff stehende Mehrscheiben-Wellenbremsvorrichtung (90) zum Bremsen der Sekundärwelle (16) umfasst, wenn sich die Kupplungsvorrichtung in der sekundären Kupplungsstellung befindet.

2. Hybrid-Unterbaugruppe (10) nach Anspruch 1, **dadurch gekennzeichnet, dass** die Wellenbremsvorrichtung (90) vom Mehrscheibentyp axial zwischen dem Rotor der reversierbaren elektrischen Maschine (56) und der Kupplungsvorrichtung (58) angeordnet ist.

3. Hybrid-Unterbaugruppe (10) nach Anspruch 1 oder 2, **dadurch gekennzeichnet, dass** die Wellenbremsvorrichtung (90) vom Mehrscheibentyp einen drehbaren Scheibenhalter (92) umfasst, der so angeordnet ist, dass er drehfest mit der Abtriebswelle (57) verbunden ist, einen feststehenden Scheibenhalter (93), der drehfest mit einem feststehenden Teil des Getriebegehäuses (18) verbunden ist, und eine Mehrscheibenbaugruppe (91), die aus einem ersten Satz Scheiben (91a), die mit Keilnuten des drehbaren Scheibenhalters in Eingriff stehen, und einem zweiten Satz Scheiben (91b), die mit den Keilnuten des feststehenden Scheibenhalters in Eingriff stehen.

4. Hybrid-Unterbaugruppe (10) nach dem vorherigen Anspruch, **dadurch gekennzeichnet, dass** der drehbare Scheibenhalter (92) der Wellenbremsvorrichtung (90) über eine Verzahnung (94) drehfest mit der Abtriebswelle (57) verbunden oder über Befestigungsschrauben, Nieten oder durch Schweißen starr an der Abtriebswelle befestigt ist.

5. Hybrid-Unterbaugruppe (10) nach einem der vorstehenden Ansprüche, **dadurch gekennzeichnet, dass** die Lamellenbaugruppe der Wellenbremsvorrichtung (90) axial durch einen ringförmigen Betätigungskolben (95) axial zur Abtriebswelle (57) der reversierbaren elektrischen Maschine (56) gedrückt wird, wobei der Betätigungskolben (95) axial in einer Druckkammer (96) geführt ist, die direkt oder indirekt in einem Stator (56a) der reversiblen elektrischen Maschine (56) ausgebildet ist.

6. Hybrid-Unterbaugruppe (10) nach einem der vorstehenden Ansprüche, **dadurch gekennzeichnet, dass** die Kupplungsvorrichtung (58) mehrere Kupplungspositionen umfasst, darunter eine erste Zwischenkupplungsposition, die sich von der sekundären Kupplungsposition unterscheidet und die Abtriebswelle (57) der reversiblen elektrischen Maschine (56) kinematisch mit der Zwischenwelle (26) verbindet, und die mit der Abtriebswelle (57) der Hybrid-Unterbaugruppe in Eingriff stehende Mehrscheibenbremsvorrichtung so angeordnet ist, dass sie die Zwischenwelle abbremst, wenn sich die Kupplungsvorrichtung in der ersten Zwischenkupplungsstellung befindet.

7. Hybrid-Unterbaugruppe (10) nach einem der vorstehenden Ansprüche, **dadurch gekennzeichnet, dass** die Kupplungsvorrichtung (58) in mindestens einer Ausrückstellung die Abtriebswelle (57) der reversierbaren elektrischen Maschine (56) kinematisch gleichzeitig von der Zwischenwelle (26) und der Sekundärwelle (16) ausrückt.

8. Hybrid-Unterbaugruppe (10) nach einem der vorstehenden Ansprüche, **dadurch gekennzeichnet, dass** die Kupplungsvorrichtung (58) mindestens einen Kupplungsmechanismus (59, 159, 259, 359) umfasst, der kinematisch dauerhaft mit der Abtriebswelle (57) der reversiblen elektrischen Maschine (56) verbunden ist, einem Zwischengetriebe (260, 360), das kinematisch fest mit der Zwischen swelle (26) verbunden ist, und einem Sekundärgetriebe (264), das kinematisch fest mit der Sekundärwelle (16) verbunden ist.

9. Hybrid-Unterbaugruppe (10) nach dem vorherigen Anspruch, **dadurch gekennzeichnet, dass** das Sekundärgetriebe (264) ein Umkehrzahnrad (66) umfasst, das durch ein mit der Zwischenwelle (26) koaxiales Führungslager (69) drehbar geführt ist.

10. Hybrid-Unterbaugruppe (10) nach Anspruch 6, **dadurch gekennzeichnet, dass** die Kupplungsvorrichtung (58) in der ersten Zwischeneingriffsstellung die Abtriebswelle (57) der reversierbaren elektrischen Maschine (56) mit der Zwischenwelle (26) mit einem Zwischengetriebeverhältnis kinematisch verbindet, die Kupplungsvorrichtung (58) in der sekundären Kupplungsstellung die umkehrbare elektrische Maschine (56) mit der Sekundärwelle (16) mit einem sekundären Übersetzungsverhältnis kinematisch verbindet, und dass mindestens eines der folgenden Kriterien erfüllt ist:
- das Sekundärübersetzungsverhältnis größer als 6 und vorzugsweise größer oder gleich 8 ist;
- das Zwischenübersetzungsverhältnis zwischen der Zwischenwelle (26) und der Abtriebswelle (57) der reversierbaren elektrischen Maschine (56) größer als 4 und vorzugsweise größer oder gleich 6 ist;
- das Sekundärübersetzungsverhältnis streng größer ist als das Zwischenübersetzungsverhältnis, vorzugsweise mit einem Faktor größer oder gleich 1,5 zwischen dem Sekundärübersetzungsverhältnis und dem Zwischenübersetzungsverhältnis.

11. Hybrid-UnterBaugruppe (10) nach Anspruch 6, **dadurch gekennzeichnet, dass** die Kupplungsvorrichtung (58) in einer zusätzlichen Zwischenkupplungsstellung die umkehrbare elektrische Maschine (56) kinematisch mit der Zwischenwelle (26) mit einem zusätzlichen Zwischenübersetzungsverhältnis verbindet, das sich von einem Zwischenübersetzungsverhältnis unterscheidet.

12. Hybrid-Unterbaugruppe (10) nach einem der vorstehenden Ansprüche, **dadurch gekennzeichnet, dass** die Abtriebswelle (57) der reversierbaren elektrischen Maschine (56) eine Dreh sachse (300) parallel zu einer Drehachse der Zwischenwelle (26) aufweist, wobei vorzugsweise eines der folgenden Merkmale realisiert ist:
- die Drehachse (300) der Abtriebswelle (57) mit der Drehachse der Zwischenwelle (26) zusammenfällt;
- die Drehachse (300) der Abtriebswelle (57) ist von der Drehachse der Zwischenwelle (26) beabstandet;
- die Drehachse (300) der Abtriebswelle (57) ist von einer Drehachse (100) der Primärwelle (12) beabstandet;
- die Drehachse (300) der Abtriebswelle (57) ist von einer Drehachse der Sekundärwelle (16) beabstandet.

13. Hybrid-Unterbaugruppe nach einem der vorstehenden Ansprüche, **dadurch gekennzeichnet, dass** die Kupplungsvorrichtung (58) einen oder mehrere der folgenden Kupplungsmechanismen umfasst :
- einen Klauenkupplungsmechanismus (59, 159),
- einen Synchronisiermechanismus,
- eine Kupplungsvorrichtung (259, 359), vorzugsweise eine Reibungskupplungsvorrichtung, vorzugsweise eine Nasskupplungsvorrichtung,
- eine doppelte Reibungskupplung (259), vorzugsweise nass,
- eine dreifache Reibungskupplung (359), vorzugsweise nass.

14. Hybrid-Unterbaugruppe (10) nach einem der vorstehenden Ansprüche, **dadurch gekennzeichnet, dass** die Elektromotoreinheit zwei umkehrbare Elektromaschinen (56) umfasst, die jeweils einen Rotor mit einer um eine Drehachse (X1, X2) drehenden Abtriebswelle (57) umfassen, wobei die beiden Abtriebswellen (57) gleichzeitig an einem gemeinsamen Zahnrad (110) kämmen, das parallel zu den beiden Drehachsen (X1, X2) angeordnet ist, wobei die Wellenbremsvorrichtung (90) indirekt mit den Abtriebswellen (57) durch Bremsen des zugehörigen gemeinsamen Zahnrades (110) in Eingriff steht.

15. Hybrid-Unterbaugruppe (10) nach Anspruch 3, **dadurch gekennzeichnet, dass** die Wellenbremsvorrichtung (90) über ein Untersetzungsgetriebe (Z1, Z2) indirekt mit der Abtriebswelle (57) der umkehrbaren elektrischen Maschine in Eingriff steht, wobei der drehbare Scheibenhalter (92) drehfest mit dem Abtriebsritzel (Z2) des Untersetzungsgetriebes verbunden ist.

## Claims

1. A hybrid sub-assembly (10) for driving a vehicle, having:
• at least one primary shaft (12);
• at least one secondary shaft (16);
• a transmission gearbox (18) comprising at least one intermediate shaft (26) different from the primary shaft (12) and the secondary shaft (16) and sets of gear wheels (38, 28, 40, 30, 32, 42, 36, 48, 44, 46) for obtaining a plurality of gear ratios between the primary shaft (12) and the secondary shaft (16) via the intermediate shaft (26);
• an electromotive unit (5) comprising at least one reversible electric machine (56), and a coupling device (58) which, in at least one intermediate coupling position, kinematically connects the output shaft (57) of the reversible electric machine (56) to the secondary shaft (16) without going via the intermediate shaft (26),
wherein the hybrid sub-assembly comprises a multi-disc-type shaft braking device (90) engaged with the output shaft (57) for braking the secondary shaft (16) when the coupling device is in the secondary coupling position.

2. The hybrid sub-assembly (10) as claimed in claim 1, wherein the multi-disc-type shaft braking device (90) is interposed axially between the rotor and the reversible electric machine (56) and the coupling device (58).

3. The hybrid sub-assembly (10) as claimed in claim 1 or 2, wherein the multi-disc-type shaft braking device (90) comprises a rotating disc carrier (92) arranged to be rotatably connected to the output shaft (57), a static disc carrier (93) arranged to be rotatably connected to a fixed part of the transmission gearbox (18) and a multi-disc assembly (91) constituted by a first set of discs (91a) engaged with splines of the rotating disc carrier, and a second set of discs (91b) engaged with splines of the static disc carrier.

4. The hybrid sub-assembly (10) as claimed in the preceding claim, wherein the rotating disc carrier (92) of the shaft braking device (90) is rotatably splined (94) with the output shaft (57) or rigidly fixed to the output shaft by means of fixing screws, rivets or welding.

5. The hybrid sub-assembly (10) as claimed in one of the preceding claims, wherein the multi-disc assembly of the shaft braking device (90) is axially pressed by an annular actuating piston (95) coaxial with the output shaft (57) of the reversible electric machine (56), the actuating piston (95) being axially guided within a pressure chamber (96) formed directly or indirectly in a stator (56a) of the reversible electric machine (56).

6. The hybrid sub-assembly (10) as claimed in one of the preceding claims, wherein the coupling device (58) comprises a plurality of coupling positions, of which a first intermediate coupling position, different from the secondary coupling position, which kinematically connects the output shaft (57) of the reversible electric machine (56) to the intermediate shaft (26), and the multi-disc-type shaft braking device engaged with the output shaft (57) of the hybrid sub-assembly is arranged to brake the intermediate shaft when the coupling device is in the first intermediate coupling position.

7. The hybrid sub-assembly (10) as claimed in one of the preceding claims, wherein the coupling device (58), in at least one uncoupling position, kinematically uncouples the output shaft (57) of the reversible electric machine (56) simultaneously from the intermediate shaft (26) and the secondary shaft (16).

8. The hybrid sub-assembly (10) as claimed in one of the preceding claims, wherein the coupling device (58) comprises at least one coupling mechanism (59, 159, 259, 359) permanently kinematically connected to the output shaft (57) of the reversible electric machine (56), an intermediate speed reducer (260, 360) permanently kinematically connected to the intermediate shaft (26) and a secondary speed reducer (264) permanently kinematically connected to the secondary shaft (16).

9. The hybrid sub-assembly (10) as claimed in the preceding claim, wherein the secondary speed reducer (264) comprises a reversing gear wheel (66) rotationally guided by a guide bearing (69) that is coaxial with the intermediate shaft (26).

10. The hybrid sub-assembly (10) as claimed in claim 6, wherein, in the first intermediate coupling position, the coupling device (58) kinematically connects the output shaft (57) of the reversible electric machine (56) to the intermediate shaft (26) with an intermediate gear ratio, in the secondary coupling position, the coupling device (58) kinematically connects the reversible electric machine (56) to the secondary shaft (16) with a secondary gear ratio, and in that at least one of the following criteria is met:
- the secondary gear ratio is greater than 6, preferably greater than or equal to 8;
- the intermediate gear ratio is greater than 4, preferably greater than or equal to 6, between the intermediate shaft (26) and the output shaft (57) of the reversible electric machine (56);
- the secondary gear ratio is strictly greater than the intermediate gear ratio, preferably with a factor greater than or equal to 1.5 between the secondary gear ratio and the intermediate gear ratio.

11. The hybrid sub-assembly (10) as claimed in claim 6, wherein, in an additional intermediate coupling position, the coupling device (58) kinematically connects the reversible electric machine (56) to the intermediate shaft (26) with an additional intermediate gear ratio that is different from an intermediate gear ratio.

12. The hybrid sub-assembly (10) as claimed in one of the preceding claims, wherein the output shaft (57) of the reversible electric machine (56) has an axis of revolution (300) parallel to an axis of revolution of the intermediate shaft (26), one of the following features being preferably present:
- the axis of revolution (300) of the output shaft (57) is coincident with the axis of revolution of the intermediate shaft (26);
- the axis of revolution (300) of the output shaft (57) is separate from the axis of revolution of the intermediate shaft (26);
- the axis of revolution (300) of the output shaft (57) is separate from an axis of revolution (100) of the primary shaft (12);
- the axis of revolution (300) of the output shaft (57) is separate from an axis of revolution of the secondary shaft (16).

13. The hybrid sub-assembly as claimed in one of the preceding claims, wherein the coupling device (58) comprises one or more of the following coupling mechanisms:
- a dog mechanism (59, 159),
- a synchronizer mechanism,
- a clutch mechanism (259, 359), preferably a friction clutch mechanism, preferably a wet friction clutch mechanism,
- a double friction clutch (259), preferably a wet double friction clutch,
- a triple friction clutch (359), preferably a wet triple friction clutch.

14. The hybrid sub-assembly (10) as claimed in one of the preceding claims, wherein the electromotive unit comprises two reversible electric machines (56) each comprising a rotor with an output shaft (57) rotating about an axis of rotation (X1, X2), the two output shafts (57) simultaneously meshing on a common gear wheel (110) arranged parallel to the two axes of rotation (X1, X2), the shaft braking device (90) being in indirect engagement with the output shafts (57) by braking the associated common gear wheel (110).

15. The hybrid sub-assembly (10) as claimed in claim 3, wherein the shaft braking device (90) is indirectly engaged with the output shaft (57) of the reversible electric machine by use of a speed reducer (Z1, Z2), the rotating disc carrier (92) being rotationally fixed to the output gear (Z2) of the speed reducer.
